**Europäisches Patentamt**

**European Patent Office**

**Office européen des brevets**

(19)

(11) Veröffentlichungsnummer: **0 122 566**

**A2**

(12)

# EUROPÄISCHE PATENTANMELDUNG

(21) Anmeldenummer: **84103839.1**

(22) Anmeldetag: **06.04.84**

(51) Int. Cl.³: **B 24 D 17/00**
**B 29 D 27/04**

(30) Priorität: **15.04.83 DE 3313650**

(43) Veröffentlichungstag der Anmeldung:
**24.10.84 Patentblatt 84/43**

(84) Benannte Vertragsstaaten:
**AT BE CH FR GB IT LI NL SE**

(71) Anmelder: **REICH Spezialmaschinen GmbH**
**Postfach 1803 Plochinger Strasse 65**
**D-7440 Nürtingen(DE)**

(72) Erfinder: **Dettelbach, Alfred**
**Rosmaringweg 27**
**D-7000 Stuttgart 50(DE)**

(72) Erfinder: **Gresser, Gerhard**
**Zeisslerstrasse 5**
**D-7446 Oberboihingen(DE)**

(72) Erfinder: **Einsele, Gerhard**
**Kapellenstrasse 39**
**D-7440 Nürtingen(DE)**

(54) Vorrichtung zur Herstellung eines Schleifkörpers.

(57) Zur Herstellung eines Schleifschuhs aus geschäumtem Kunststoff ist eine allseitig verschließbare Schäumvorrichtung vorgesehen, deren senkrechte Stirnwände (5) Durchbrüche (6) mit einen einstellbaren Dichtorgan (22) aufweisen, das so an die Profilfläche (35) des sich durch die Durchbrüche (6) erstreckenden Profilkörpers (32) anpaßbar ist, daß es die Durchbrüche (6) sicher verschließt.

Damit ist gewährleistet, daß nach dem Ausschäumen des Kunststoffs ein Schleifschuh mit prismatischen und parallelen Flächen und Kanten entsteht.

FIG.1

EP 0 122 566 A2

6. April 1983
0122566
Reg. Nr. 1.51

1

REICH Spezialmaschinen GmbH, 7440 Nürtingen

---

Vorrichtung zur Herstellung eines Schleifkörpers

---

Die Erfindung bezieht sich auf eine Vorrichtung zur Herstellung eines Schleifkörpers gemäß Oberbegriff von Anspruch 1.

Aus der Deutschen Patentanmeldung P 31 44 077.0 ist eine solche Vorrichtung bekannt, wobei jedoch der die Profilfläche des zu schleifenden Werkstücks aufweisende, prismatische Profilkörper zusammen mit dem Schleifband auf der Bodenplatte eines Schäumwerkzeugs befestigt wird, dessen Hohlraum von geschlossenen Wandelementen umschlossen wird. Zwischen den Stirnflächen des Profilkörpers und den benachbarten Flächen der Wandelemente kann sich dabei ein Spalt bilden, in den der flüssige bzw. ausgeschäumte Kunststoff eindringt und dabei das Schleifband vom Profilkörper abhebt. Damit wird der Schleifschuh unbrauchbar.

Aufgabe der vorliegenden Erfindung ist daher die Schaffung einer Vorrichtung der eingangs genannten Art, bei der das Schleifband innerhalb des Formwerkzeugs während des Ausschäumens sicher gegen den Profilkörper gepreßt wird.

Diese Aufgabe wird erfindungsgemäß durch die im kennzeichnenden Teil des Anspruchs 1 angegebenen Merkmale gelöst.

Damit läßt sich ein Profilkörper verwenden, der länger ist als das Formwerkzeug und sich zu beiden Seiten über dieses hinaus erstreckt. Die Abmessungen der Durchbrüche sind dabei größer als die Abmessungen des Profilkörper-Querschnitts.

Das an den Wandelementen angeordnete Dichtorgan läßt sich dann
so der Profilfläche des Profilkörpers anpassen, daß die Durchbrüche
sicher verschlossen werden und das Schleifband auch während des
Ausschäumens sicher an den Profilkörper angedrückt wird. Damit ist
gewährleistet, daß nach dem Ausschäumen ein Schleifschuh mit
prismatischen und parallelen Flächen und Kanten entsteht.

Bei einer vorteilhaften Ausführungsform besteht das Dichtorgan
aus einander berührende Dichtelementen in Form von flachen Kunststofflamellen, die gegeneinander verschiebbar sind und z.B. eine
Dicke von 2 mm aufweisen, so daß eine ausreichende Abdichtung gewährleistet ist.

Bei einer weiteren vorteilhaften Ausführungsform gemäß Unteranspruch
können auf eine Bodenplatte zwei Formwerkzeuge aufgesetzt werden,
durch die sich ein einziger, genügend langer Profilkörper erstreckt.
Dadurch lassen sich gleichzeitig zwei identische Schleifschuhe herstellen, die in einer handelsüblichen Profilschleifmaschine paarweise
verwendet werden können. Der durchgehende Profilkörper gibt nämlich
die Gewähr, daß auch in der Profilschleifmaschine die Schleifschuhe
genau fluchten und ein einwandfreier Profilschliff ermöglicht wird.

Zur Abdichtung der Durchbrüche kann anstelle der Kunststofflamellen
auch ein mit Druckluft beaufschlagtes Dichtkissen oder ein Kissen
aus einem schaumförmigen, elastischen Werkstoff verwendet werden.
Dieser läßt sich auch mit den Kunststofflamellen kombinieren.

Im folgenden ist ein Ausführungsbeispiel der Erfindung unter Bezugnahme auf die Zeichnungen näher beschrieben.

Es zeigen:

Fig. 1    Schäumvorrichtung von vorne, rechter Teil
          geschnitten nach Linie I - I in Fig. 2

Fig. 2    Teil einer Schäumvorrichtung mit einem Formwerkzeug
          von oben, Deckplatte abgenommen

Fig. 3    Teil einer Schäumvorrichtung mit einem Formwerkzeug
          von der Seite

0122566

Fig. 4 Teil einer Bodenplatte der Schäumvorrichtung mit aufgelegtem Profilkörper, Formwerkzeug abgenommen.

Fig. 5 Formwerkzeug.

Fig. 6 Lamelle.

Fig. 7 Formwerkzeug auf Bodenplatte aufgesetzt, Einfüllen des Kunststoffes.

Fig. 8 Schäumvorrichtung mit Deckplatte verschlossen, Schäumvorgang.

Fig. 9 Fertiger Schleifkörper.

- 4 -

0122566

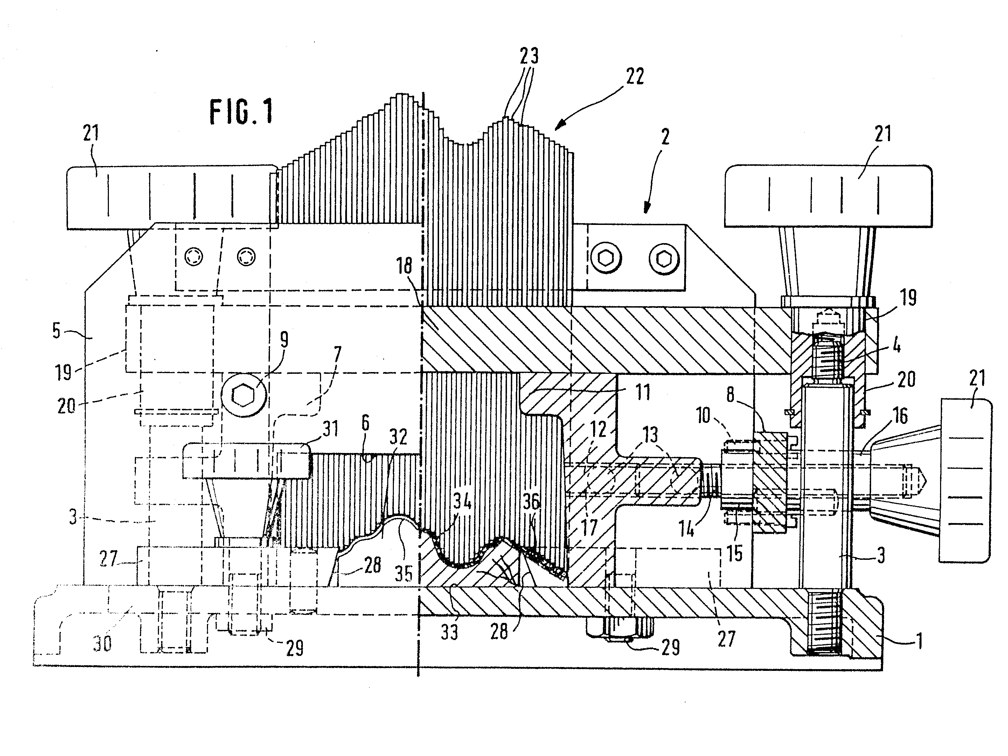

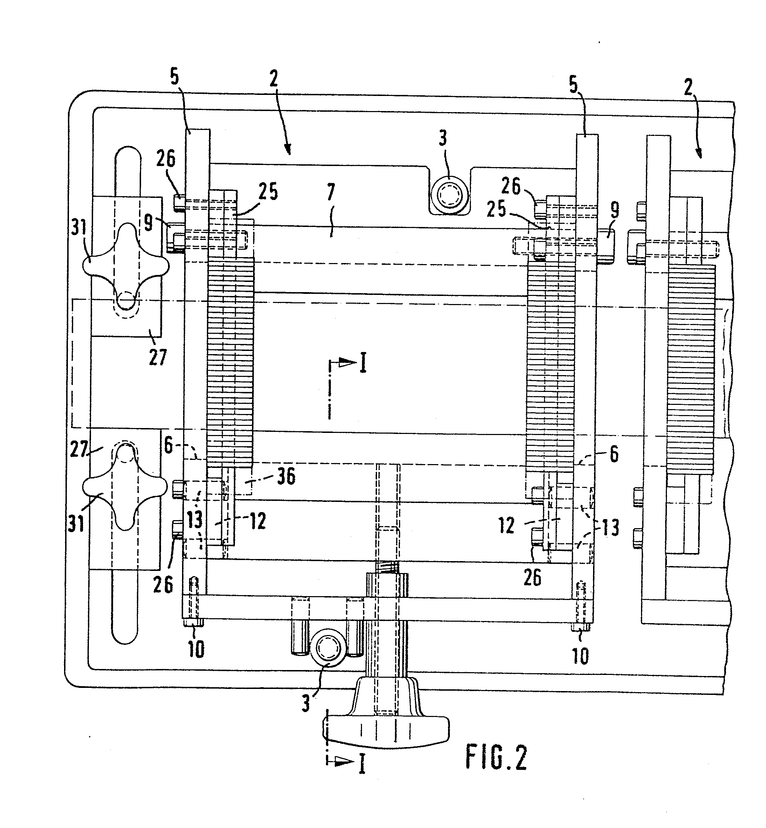

Das Schäumwerkzeug besteht aus einer Bodenplatte 1, auf der zwei gleiche Formwerkzeuge 2 abnehmbar befestigt sind. Dazu sind in die Bodenplatte 1 je zwei Säulen 3 eingeschraubt, die an ihren oberen Enden Gewindezapfen 4 aufweisen (Fig. 1, 2, 4 und 5).

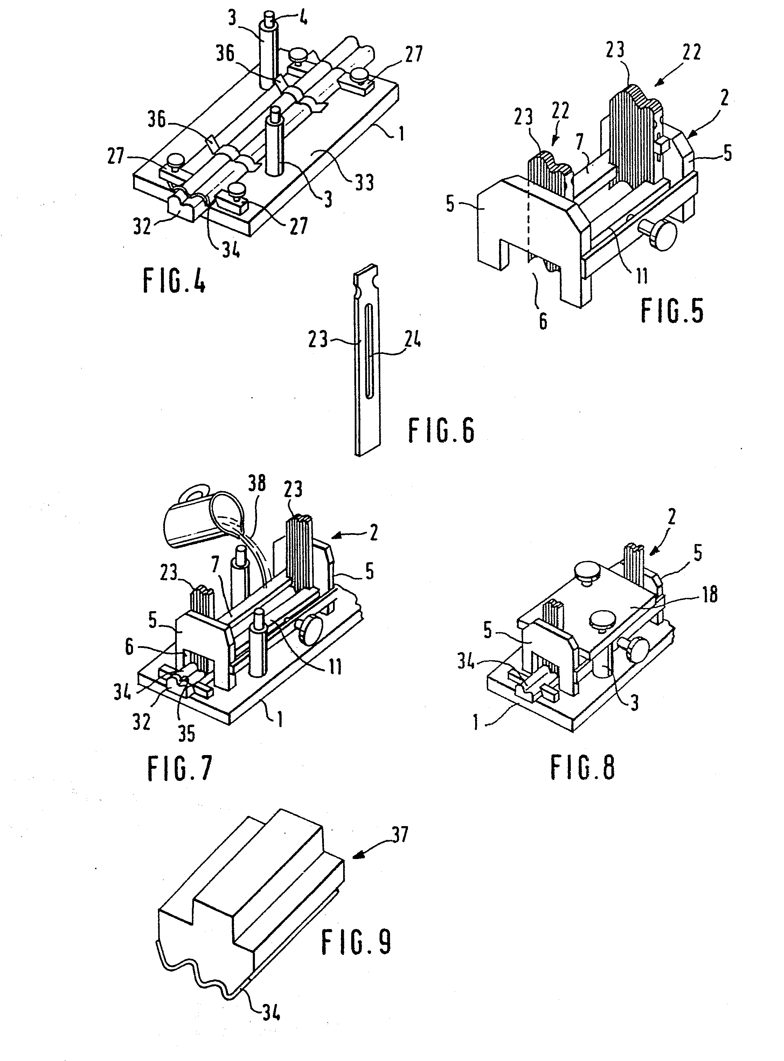

Das eigentliche Formwerkzeug 2 besteht aus zwei gleichen Stirnwänden 5, die mit rechteckigen Durchbrüchen 6 versehen sind (Fig.5).

Auf einer Seite sind die beiden Stirnwände 5 durch ein aus einem Aluminiumprofil bestehenden Wandelement 7 und auf der anderen Seite durch eine flache Leiste 8 durch Schrauben 9 und 10 miteinander verbunden. An der Seite der Leiste 8 ist ein bewegliches Wandelement 11 angeordnet, das den gleichen Profilquerschnitt wie Wandelement 7 aufweist und in dessen Nuten 12 zwei Zapfen 13 eingreifen, die in den Stirnwänden 5 befestigt sind.

Zur Verschiebung von Wandelement 11 dient eine Schraubspindel 14, die zwischen Hülsen 15 und 16 in der Leiste 8 drehbar gelagert ist und die in die Gewindebohrung 17 von Wandelement 11 eingreift.

Zum oberen Abschluß von Formwerkzeug 2 dient eine Deckplatte 18, in deren Bohrungen 19 Gewindehülsen 20 drehbar gelagert sind, wobei in verschraubtem Zustand die Gewindezapfen 4 in die Gewinde der Gewindehülsen 20 eingreifen. Zur Verdrehung der Gewindehülsen wie auch der Schraubspindel 14 dienen Sterngriffe 21.

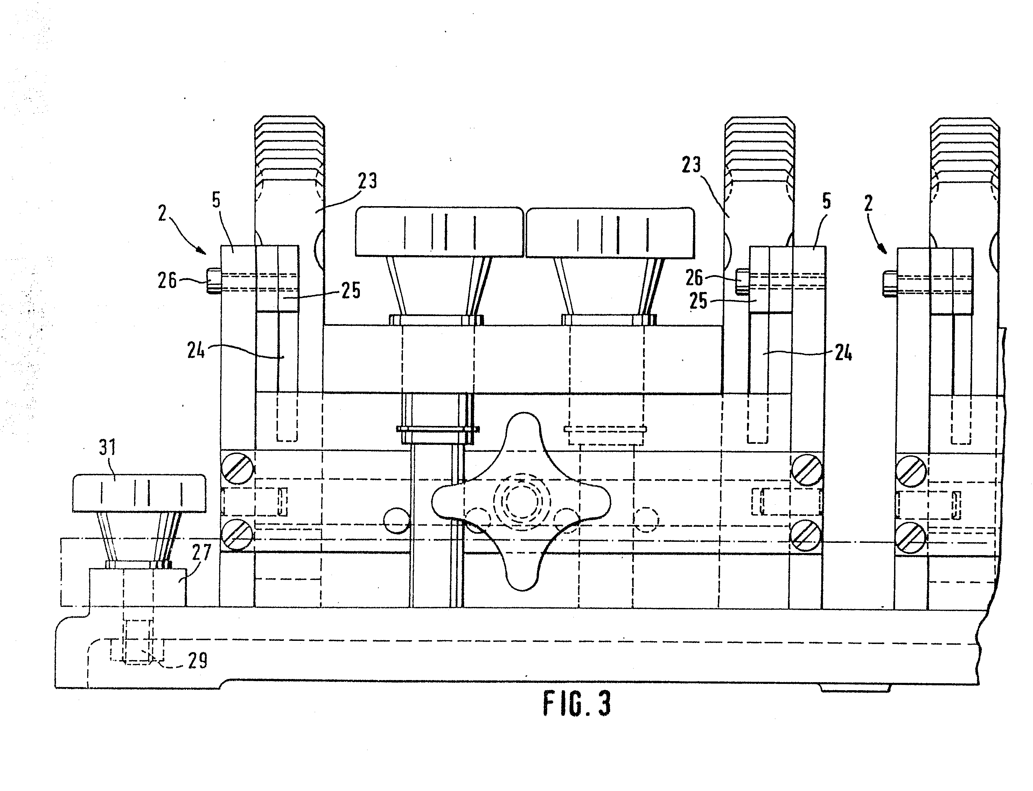

Zum Verschließen der Durchbrüche 6 dient ein Dichtorgan 22, das aus einem Paket von aneinanderliegenden, flachen Lamellen 23 aus Kunststoff besteht. (Fig.5+6) Wie Fig. 3+6 zeigen, sind diese mit rechteckigen Schlitzen 24 versehen, in die ein Haltebügel 25 eingreift, der mit Schrauben 26 an den Stirnwänden 5 befestigt ist. Die Lamellen 23 lassen sich somit um einen bestimmten Betrag gegeneinander verschieben.

An den beiden Enden von Bodenplatte 1 sind Pratzen 27 vorgesehen, die eine geneigte Spannfläche 28 aufweisen und die mit einem Gewindebolzen 29 verschiebbar in einer Nut 30 von Bodenplatte 1 gelagert und an dieser mittels eines Sterngriffs 31 festspannbar sind.

0122566

Zur Herstellung eines Schleifkörpers wird zunächst ein prismatischer
Profilkörper 32 auf die ebene Auflagefläche 33 von Bodenplatte 1
aufgelegt und mit einem hochelastischen Schleifband 34 bedeckt (Fig.4).
Mit dem Schleifband 34 ist im Bereich der Lamellen 23 ein Dichtstreifen 36 aus einem elastischen Schaumstoff verklebt. Der Profilkörper 32 wird dann zusammen mit dem Schleifband 34 mit den Pratzen
27 an der Auflagefläche 33 fixiert.

Das Formwerkzeug 2 wird jetzt ohne Deckplatte 18 auf die Bodenplatte 1
aufgesetzt, wobei der Profilkörper 32 mit Schleifband 34 die Durchbrüche 6 durchdringt und die Stirnwände 5 überragt (Fig.7).

Bei zurückgezogenem Wandelement 11 lassen sich jetzt die Lamellen 23
so lange nach unten verschieben, bis sie an den mit dem Schleifband 34
verklebten Dichtstreifen 36 und damit die Profilfläche 35 von Profilkörper 32 anstoßen. Der Dichtstreifen 36 füllt dabei noch die
kleinsten Lücken zwischen Lamellen 23 und Profilkörper 32 aus.
Nachdem das Paket der Lamellen 23 mit dem Wandelement 11 aneinandergepreßt ist, dichtet es die Durchbrüche 6 sicher ab und presst das
Schleifband 34 gegen die Profilfläche 35.

Der Kunststoff kann jetzt in das nach oben noch offene Formwerkzeug 2
eingefüllt werden und anschließend wird die Deckplatte 18 aufgesetzt
und mit den Gewindezapfen 4 der Säulen 3 verschraubt. In dem allseits
geschlossenen Hohlraum zwischen Bodenplatte 1, den Stirnwänden 5, den
Wandelementen 7, 11 und der Deckplatte 18 kann der Kunststoff jetzt
ausschäumen und erstarren und sich dabei mit dem Schleifband 34
verbinden.

Zum Herausnehmen des fertigen Schleifkörpers wird die Deckplatte 18
abgenommen, das Formwerkzeug 2 abgehoben und das Wandelement 11 entspannt, so daß der Schleifkörper entnommen werden kann.

PATENTANSPRÜCHE

1) Vorrichtung zur Herstellung eines Schleifkörpers mit einer
   Bodenplatte, auf der ein die Profilfläche des zu schleifenden
   Werkstücks aufweisender, prismatischer Profilkörper, sowie ein
   aus Wandelementen und einer Deckplatte bestehendes Formwerkzeug
   abnehmbar befestigt sind, d a d u r c h   g e k e n n z e i c h -
   n e t ,  daß die zur Längserstreckung des Profilkörpers (32)
   senkrechten Stirnwände (5) Durchbrüche (6) mit einem einstellbaren
   Dichtorgan (22) aufweisen, das so an die Profilfläche (35) des
   sich durch die Durchbrüche (6) erstreckenden Profilkörpers (32)
   anpaßbar ist, daß es die Durchbrüche (6) sicher verschließt.

2) Vorrichtung nach Anspruch 1, d a d u r c h   g e k e n n -
   z e i c h n e t ,  daß das Dichtorgan (22) einander berührende
   Dichtelemente (23) aufweist, die zur Anpassung an die Profilfläche (35) senkrecht zur Bodenplatte (1) verschiebbar am Formwerkzeug (2) gelagert sind.

3) Vorrichtung nach Anspruch 2, d a d u r c h   g e k e n n -
   z e i c h n e t ,  daß die Dichtelemente (23) als flache,
   zwischen den beiden Wandelementen (7, 11) angeordnete Lamellen
   ausgebildet sind.

4) Vorrichtung nach Anspruch 2 oder 3, d a d u r c h   g e k e n n -
   z e i c h n e t ,  daß die Dichtelemente (23) Längsschlitze (24)
   aufweisen, in die ein mit dem Formwerkzeug (2) verbundener Haltebügel (25) eingreift.

5) Vorrichtung nach einem der Ansprüche 2 bis 4,
   d a d u r c h   g e k e n n z e i c h n e t ,  daß
   zwischen den Dichtelementen (23) und dem mit einem
   Schleifband (34) versehenen Profilkörper (32) ein
   Dichtstreifen (36) aus elastischem Werkstoff angeordnet ist.

...

0122566

6) Vorrichtung nach Anspruch 5, d a d u r c h
g e k e n n z e i c h n e t , daß der aus Schaumstoff bestehende Dichtstreifen (36) mit dem Schleifband (34) verklebt ist.

7) Vorrichtung nach einem der Ansprüche 2 bis 6,
d a d u r c h   g e k e n n z e i c h n e t , daß
mindestens ein Wandelement (11) zum Zusammenklemmen
der Dichtelemente (23) verschieb- und feststellbar
am Formwerkzeug (2) gelagert ist.

8) Vorrichtung nach einem der Ansprüche 1 bis 7,
d a d u r c h   g e k e n n z e i c h n e t , daß
auf der Bodenplatte (1) mindestens zwei Formwerkzeuge
(2) angeordnet sind, deren Durchbrüche (6) miteinander
fluchten.

FIG.1

1/4

0122566

FIG.2

0122566

FIG. 3

4/4

FIG.4

FIG.5

FIG.6

FIG.7

FIG.8

FIG.9

0122566